# EUROPEAN PATENT APPLICATION

(11) **EP 3 006 244 A1**
(43) Date of publication of application: **13.04.2016**
(21) Application number: 14807501.3
(22) Date of filing: 26.03.2014
(51) Int. Cl.: B60K 6/28, B60K 6/48, B60K 6/543, B60L 1/00, B60W 10/26, B60W 10/30, B60W 20/00, F02N 11/08

(54) **HYBRID VEHICLE CONTROL DEVICE**

(30) Priority: 07.06.2013 JP 2013120687
(71) Applicant: Nissan Motor Company, Limited, Kanagawa-ku Yokohama-shi Kanagawa 221-0023 (JP)
(72) Inventor: KODAWARA, Tomoyuki, Atsugi-shi Kanagawa 243-0123 (JP)
(74) Representative: Hoefer & Partner Patentanwälte mbB
(86) International application number: PCT/JP2014/058476
(87) International publication number: WO 2014/196242

(57) **Abstract**

In order to configure a capacitor power supply circuit simply by adding a capacitor and capacitor charging circuit to an existing circuit without changing the control or capacity of a high power battery and an auxiliary equipment load power supply system, the capacitor power supply circuit includes a starter motor (1), a transverse engine (2) and a motor/generator (4) in the drive system, and comprises, as the power supply system, a high power battery (21), a 12V battery (22), a capacitor (23), and a hybrid control module (81). An auxiliary equipment load power supply system (39) is configured by connecting the high power battery (21) and the 12V battery (22) via a DC/DC converter (37). Further, a DLC unit (45), configured to include the capacitor (23) and a capacitor charging circuit (41) controlled by the hybrid control module (81), is connected by branching from the DC/DC converter (37) of the auxiliary equipment load power supply system (39).

## Description

### TECHNICAL FIELD

The present invention relates to a control system for a hybrid vehicle having a high power battery (high voltage battery) as a motor/generator power supply, a low power battery (low voltage battery) as a vehicle auxiliary equipment power supply, and a capacitor as a starter motor power supply for an engine start-up.

### BACKGROUND

Conventionally, an engine start-up device is known in which a capacitor as a starter motor power supply for an engine start-up is configured to be charged receiving power from a low power battery representing a vehicle auxiliary equipment power supply (for example, see

### Patent Document 1).

### PRIOR ART LITERATURE

### PATENT DOCUMENT

**Patent Document 1:** JP 2012-167627 A

### SUMMARY OF THE INVENTION

### PROBLEM TO BE SOLVED BY THE INVENTION

However, in the conventional device, the low power battery and the capacitor are independent from the high power battery representing the motor/generator power supply such that the required power for the vehicle auxiliary equipment and the required power at the time of starter start-up are supplied from power supply of the low power battery. In other words, since the lower power battery and the capacitor are not configured to be electrically independent, a problem arises that control of the low power battery and the battery capacity of the low power battery are required to be changed from the control and capacity which have been set prior to addition of the capacitor.

The present invention was made in consideration of the above problem and aims to provide a control system for a hybrid vehicle that can constitute a capacitor power supply circuit by simply adding a capacitor and a capacitor charging circuit to the existing circuit without changing the control/capacity of the high power battery and the auxiliary equipment power supply system.

### MECHANISM FOR SOLVEING THE PROBLEM

In order to achieve the above object, the present invention has a starter motor, an engine, and a motor / generator in the driving system. As power supply system, a high power battery as power supply of the motor / generator, a low power battery as power supply of vehicle auxiliary equipment, a capacitor as power supply of the starter motor, and a capacitor charge and discharge control unit for controlling charging and discharging of the capacitor are provided.
In the control system for the hybrid vehicle, an auxiliary equipment load power supply system is constituted or configured by connecting the high power battery and the low power battery via a DC/DC converter. Further, a starter load power supply system which is constituted or configured by the capacitor and a capacitor charging circuit controlled by the capacitor power supply control unit is connected to and by branching from the DC/DC converter of the auxiliary equipment load power supply system.

### EFFECT OF THE INVENTION

Thus, the starter load power supply system is constituted by a capacitor and a capacitor charging circuit controlled by the capacitor power supply control unit is connected to and branch from the DC / DC converter for auxiliary equipment load power supply system.

That is, the starter load power supply system constituted to include a capacitor and a capacitor charging circuit is electrically independent from the high power battery and the auxiliary equipment load power supply system. Thus, it is not necessary to change or modify the control of the high power battery and the DC/DC converter from those prior to the starter load power supply system being added. Further, it is not necessary for the converter capacity of the DC/DC converter and the battery capacity of the low power battery to be changed from those set prior to the starter load power supply system being added.

As a result, it is possible to constitute the capacitor power supply circuit by only adding a capacitor and a capacitor charging circuit to the existing circuit without changing the high power battery and control/capacity of the auxiliary equipment load power supply system.

### BRIEF DESCRIPTION OF THE DRAWINGS

FIG. 1 is an overall system diagram showing an FF plug-in hybrid vehicle to which the control system of a first embodiment is applied;
FIG. 2 is a power supply circuit diagram showing a power supply system arrangement with a focus on a starter power supply source of the FF plug-in hybrid vehicle to which the control system of the first embodiment is applied;
FIG. 3 is a block diagram showing a control system configuration of the FF plug-in hybrid vehicle to which the control system of the first embodiment is applied;
FIG. 4 is a converter circuit diagram showing a basic circuit configuration of the DC / DC converter according to the boosting circuit provided in the capacitor charging circuit of the first embodiment; and
FIG. 5 is a flowchart showing a flow of a capacitor power supply control process executed by a hybrid control module of the first embodiment.

### EMBODIMENT FOR CARRYING OUT THE INVENTION

Below, the best mode for implementing the control system of the plug-in hybrid vehicle according to the present invention will be described based on a first embodiment shown in the drawings.

### FIRST EMBODIMENT

First, a description is given of the configuration.
The configuration of the FF plug-in hybrid vehicle employing the control system of the first embodiment (an example of a plug-in hybrid vehicle) is described separately in a "Drive System Configuration", "Power Supply System Configuration", "Control System Configuration", and "Detailed Configuration of Capacitor Charge and Discharge Control".

### [DRIVE SYSTEM CONFIGURATION]

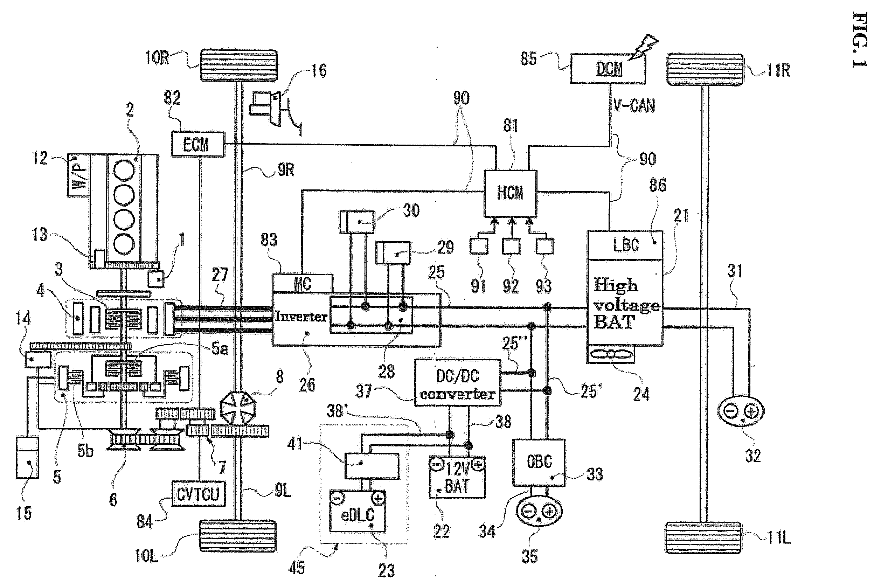

FIG. 1 is an overall system diagram showing an FF plug-in hybrid vehicle. Below, a description is given of a drive system configuration of the FF plug-in hybrid vehicle.

As shown in FIG. 1, as the drive system, a starter motor 1 (abbreviated as "M"), a transverse engine (abbreviated as "ICE"), a first clutch 3 (abbreviated as "CL1"), a motor/generator 4 (abbreviated as "M/G"), a second clutch 5 (abbreviated as "CL2"), and a belt-type continuously variable transmission (abbreviated as "CVT") are provided. An output axis of the belt-type CVT 6 is drivingly connected to left and right front wheels 10R, 10L via a final reduction gear train 7, a differential gear 8, and the left and right drive shafts 9R, 9L. Note that the left and right rear wheels 11R, 11L are configured as driven wheels.

The starter motor 1 has a gear meshing with an engine starting gear provided on the crankshaft of the engine 2 and is powered by a capacitor 23 to be described below and forms a cranking motor for driving or rotating the crankshaft when the engine is started.

The transverse engine 2 is an engine which is arranged in the front room with the crankshaft direction in the vehicle width direction, and has an electric water pump 12, a crank shaft rotation sensor 13 for detecting the reverse rotation of the engine 2 of the transverse engine 2.

The first clutch 3 is a hydraulic dry, multi-plate friction clutch interposed between the transverse engine 2 and the motor / generator 4, which is subject to selective control by a first clutch oil pressure to complete engagement / slip-engagement / release.

The motor / generator 4 is a permanent magnet synchronous motor of three-phase alternating current type connected to the transverse engine 2 via the first clutch 3. The motor / generator 4 is driven by a power supply of the high voltage battery 21 to be described below.
The starter coil of the motor/generator is connected via an AC harness to an inverter 26, which converts a direct current to a three-phase current during a driving operation while converting the three phase current to direct current during regeneration.

The second clutch 5 is a hydraulic wet-type multi-plate friction clutch interposed between the motor/generator 4 and the left and right front wheels representing driving wheels, and is subject to selective control by a second clutch hydraulic pressure to the full engagement / slip-engagement / release. The second clutch 5 makes use of a forward clutch 5a and a reverse brake 5b provided for forward-reverse switching mechanism. That is, during forward traveling, the forward clutch 5a acts as the second clutch 5, while, during backward traveling, the reverse brake 5b serves as the second clutch 5.

The belt-type continuously variable transmission 6 is a transmission for obtaining a stepless or continuous speed change ratio by changing the winding diameter of the belt by shift hydraulic pressures to the primary fluid chamber and the secondary fluid chamber. The belt-type continuously variable transmission 6 is provided with a main oil pump 14 (mechanical drive), a sub oil pump 15 (motor driven), a control valve unit (not shown) that produces a first clutch hydraulic pressure and a shift hydraulic pressure using as a source pressure a line pressure that is obtained by pressure regulating the pump discharge pressure.

The first clutch 3, the motor / generator 4, and the second clutch 5 constitutes a one-motor-two-clutch drive system which operates as main drive modes according to the drive system in "EV mode", and "HEV mode". The "EV mode" represents an electric vehicle mode in which the motor/generator only is provided as the driving source with the first clutch 3 released and the second clutch engaged. Travelling in the "EV mode" is referred to as the "EV running". The "HEV mode" represents a hybrid vehicle mode in which the transverse engine 2 and the motor/generator 4 act as power source with both clutches 3, 5 engaged. Travelling in the "HEV mode" is referred to as "HEV running".

The motor / generator 4 is equipped with a regenerative cooperative brake unit 16 which controls the total braking torque during braking operation basically in response to a regenerative operation during braking operation, The regenerative cooperative brake unit 16 is provided with a brake pedal, an electric booster, and a master cylinder. The electric booster carries out a coordinated control of regenerative part/hydraulic part allocation such that, during braking operation, the amount that is obtained by subtracting from a required braking force represented by a brake pedal operation amount an available regenerating braking force will be borne by the hydraulic braking force.

### [POWER SUPPLY SYSTEM CONFIGRATION]

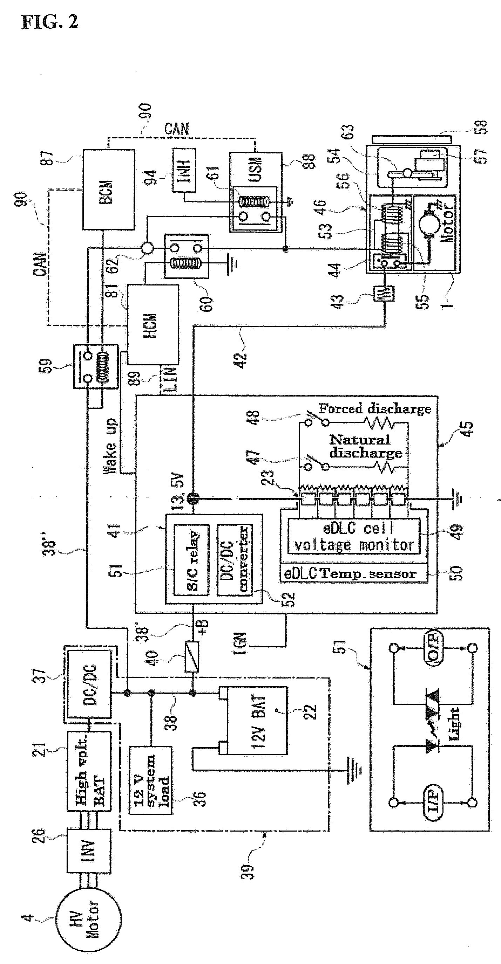

FIG. 1 is an overall system diagram showing an FF plug-in hybrid vehicle, and FIG. 2 is a power supply circuit diagram with focus on the starter power supply. Below, with reference to FIG. 1 and 2, a description is given of the power supply system configuration for the FF plug-in hybrid vehicle.

As the power supply system, as shown in FIG. 1, a high power battery 21 as a motor / generator power, and a 12V battery 22 (low power battery) as a 12V system load power, and a capacitor 23 as a starter power supply, respectively.

The high power battery 21 is a rechargeable or secondary battery mounted as a power source of the motor / generator 4, and uses, for example, lithium ion battery. One or more of cell modules formed by laminating a plurality of cells is stored within a battery case. A junction box is accommodated in the high power battery 21, which aggregates relay circuits for supply / cutoff / distribution of high power. Further, a battery temperature adjustment unit 24 for air-conditioning function and lithium battery controller 86 for monitoring the battery charge capacity (battery state of charge; battery SOC) and the battery temperature are attached.

The high voltage battery 21 and the motor/generator 4 are connected through a DC harness 25, an inverter 26, and an AC harness 27. A junction box 28 which aggregates relay circuits of the supply / cutoff / distribution for high voltage is accommodated in the inverter 26. Further, the air-conditioning circuit 29, an electric air compressor 30, and a motor controller 83 to perform a power running / regenerative control are attached. In other words, the inverter 26 converts the direct current from the DC wiring harness into a three phase alternating current to the AC wiring harness 27 when the inverter 26 drives the motor/generator 4 due to discharge of the high voltage battery 21 during a driving mode. When the high voltage battery 21 is charged during a regenerative mode by power of the motor /generator 4, the three-phase AC from the AC wiring harness 27 is converted into the direct current to the DC wiring harness 25.

In addition to a rapid external charging port 32 connected to the high voltage battery 21 through a DC harness 31, a normal external charging port 35 is connected to the high voltage battery 21 via a DC branch harness 25', a charger 33 and the AC harness 34. The charger 33 functions to a voltage conversion and AC/DC conversion, When rapid external charging, for example, an external charging is performed by connecting a connector plug of a charging station installed in the road or the like to the rapid external charging port 32 (plug-in rapid or quick charging). During the normal external charging, for example, a connector plug from the household power supply is connected to the normal external charging port 35 for external charge (plug-in normal 2 charging).

The 12V battery 22 is a rechargeable secondary battery mounted as a power source of 12V system load 36 representing the other auxiliary equipment except the starter motor 1. For example, a lead battery is used which is generally mounted in the engine vehicle. The high voltage battery 21 and the 12V battery 22 are connected via DC branch harness 25", a DC/DC converter 37, and a battery harness 38. The DC/DC converter 37 is intended to convert the several hundred volts voltage from the high voltage battery 21 to 12V. By controlling the DC/DC converter by the hybrid control module 81, the charge capacity of the 12V battery is configured to be managed.

The capacitor 23 is a storage device that is mounted as a dedicated power supply of the starter motor 1. A capacitor called as an electric double layer capacitor (eDLC: electric Double Layer Capacitor) is used, which has a large capacitance and excellent characteristics in quick charging and discharging performance. As shown in FIG. 2, the auxiliary equipment load power supply system 39 and the capacitor 23 are connected via a battery branch harness 38' provided with a fuse 40 and a capacitor charging circuit 41. The capacitor 23 and the starter motor 1 are connected via a capacitor harness 42, a resistor 43 and a relay switch 44. In addition, a DLC unit 45 is configured by the capacitor 23 and the capacitor charging circuit 41 while a starter unit 46 is configured by the starter motor 1, the relay switch 44, and the like. Below, a description of the detailed configuration of the DLC unit 45 and the starter unit 46 is given below.

As shown in FIG. 2, the DCL unit 45 is provided with the capacitor 23, a capacitor charging circuit 41, a self-discharge switch 47, a forced discharge switch 48, a cell voltage monitor 49 (the capacitor voltage detecting unit), and a capacitor temperature sensor 50.

The capacitor 23 is formed by connecting a plurality of DLC cells in series / parallel. The self-discharge switch 47, the forced discharge switch 48, and the capacitor temperature sensor 50 are disposed on both ends of the plurality of DLC cells in parallel. Further, the cell voltage monitor 49 is provided parallel to each of DLC cells so as to detect a cell voltage (= capacitor capacity) of each cell of the plurality of DLC cells.

The capacitor charging circuit 41 is constituted by a DC / DC converter circuit integrating semiconductor switching relays. The capacitor charging circuit 41 includes a semiconductor relay 51 and a DC / DC converter 52 controlled by the hybrid control module 81.

The semiconductor relay 51 is a non-contact relay with light semiconductor switching elements, for example, as shown schematically in the lower left portion in FIG. 2, called as a photo-coupler for transmitting optical signals in the space of the insulated input and output. The semiconductor relay 51 has a switching function to connect or disconnect the capacitor 23 to or from the auxiliary equipment load power supply system 38.

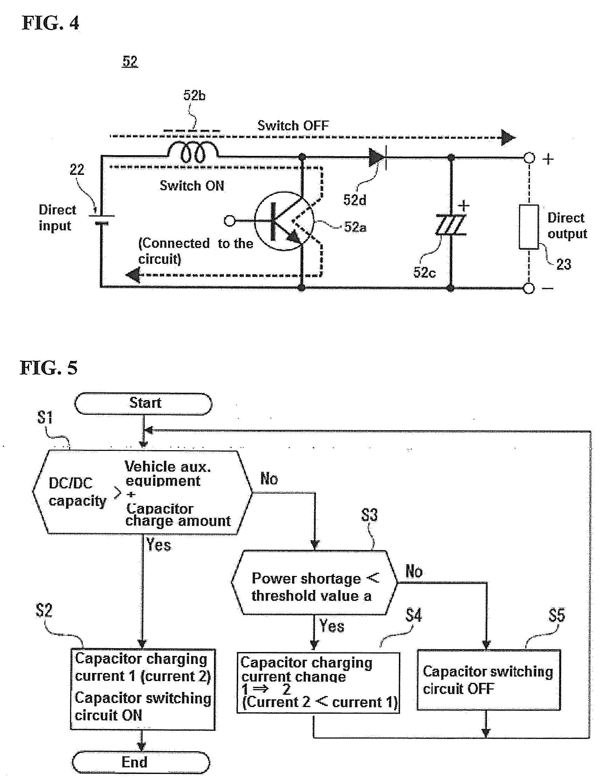

As shown in FIG. 4, the DC / DC converter 52 is a combination circuit of a switching element 52a (such as a transistor, MOS FET, etc.), a choke coil 52b, a condenser 52c, a diode 52d. When the switching element 52a is turned ON, due to current flowing from the input, the choke coil 52b stores energy. When the switching element 52a is OFF, the choke coil 52b releases energy stored in an attempt to maintain the current. Thus, when the switching elements 52a that are connected in parallel to the circuit is OFF, because the energy from the choke coil 52b is added up to the input voltage, the output voltage is boosted (12V → 13.5V). It is to be noted that this DC / DC converter circuit, in addition to direct current conversion function, has a function for switching the capacitor charging current.

The starter unit 46 includes a starter motor 1, a relay switch 44, an electromagnetic actuator 53, and a pinion shifting mechanism 54.

The electromagnetic actuator 53, by an electromagnetic force generated by energizing the two coils 55 and 56 causes the pinion 57 to a position meshing with the ring gear 58 in addition to turning the relay switch 44 on. When cutting off the current, in addition to turning off the relay switch 44, the pinion 57 will be shifted to a position released from meshing with the ring gear 58. Note that the ring gear 58 is mounted to a crankshaft of the transverse engine 2. The auxiliary equipment load power supply system 39 and two coils 55, 56 are connected via a battery branch harness 38" provided with a starter cutoff relay 59, a HEV/IS/relay 60, and a starter relay 61. The energization/shut-off of the starter cutoff relay 59 is carried out by a body control module 87. The energization/shut-off the HEV/IS/relay 60 is made by the hybrid control module 81. The energization/shut-off of the starter relay 61 is made by an under-hood switching module 88. Note that, at a crossing position of the battery branch harness 38", a voltage sensor 62 for diagnosing the relay is provided.

The pinion shifting mechanism 54 is provided with a pinion 57 which is axially moveable relative to the motor shaft of the starter motor 1 and a shift lever connected at its one end to an electromagnetic actuator 53 and fitted at the other end into the shift groove of the pinion 57.

### [CONTRAL SYSTEM CONFIGURATION]

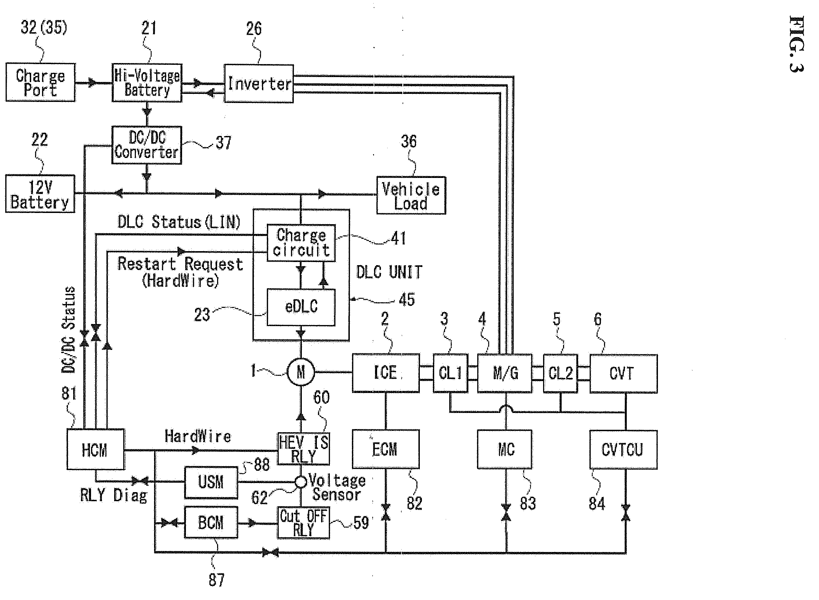

FIG. 1 shows the overall system of the FF plug-in hybrid vehicle. FIG. 2 shows the power system configuration around the starter power supply, Figure 3 shows a control system configuration. Hereinafter, based on FIGS. 1 to 3, illustrating a control system configuration of the FF plug-in hybrid vehicle.

As shown in FIGS. 1 to 3, as the control system, the hybrid control module 81 (abbreviated as "HCM") is provided as an integrated control unit that controls appropriately the energy consumed by the overall vehicle. An engine control module 82 (abbreviated as "ECM), the motor controller 83 (abbreviated as "MC"), a CVT control unit 84 (abbreviated as "CVTCU") are provided as control units connected to the hybrid control module 81. Further, a data communication module 85 (abbreviated as "DCM"), a lithium battery controller 86 (abbreviated as "LBC") are provided.. In addition, the body control module 87 (abbreviated as "BCM") and an under-hood switching module 88 (abbreviated as "USM") are provided. These control units are connected so as to be bi-directionally communicative through a CAN communication line 90 (CAN is an abbreviation of "Controller Area Network") except for a LIN communication line 89 (LIN: abbreviation for Local Interconnect Network) through which the hybrid control module 81 and the DCL unit 45 are connected each other.

The hybrid control module 81 executes various controls based on input information from each control unit, ignition switch 91, accelerator pedal opening sensor 92, a vehicle speed sensor and the like. Among them, the control that is intended to drive a FF plug-in hybrid vehicle for which an external charging is available at a high fuel consumption efficiency is referred to as the selection control of the running mode ("CD mode" and "CS mode") based on a battery SOC of the high voltage battery 21 (Running Mode Selection Control Unit).

During the "CD mode (Charge Depleting mode)", in principle, a priority is placed on an EV mode in which power of the high voltage battery is consumed, and the "CD mode" is selected during a period in which the battery SOC decreases from the full SOC to a predetermined SOC. However, in a high load running so that the driving force would be insufficient in EV running, the HEV running mode is performed exceptionally. Basically, the starting operation of the transverse engine 2 during the "CD mode" being selected, start by the starter motor 1 (starter start-up) is a basic operation. The start by the motor/generator 4 (M/G start) is thus held exceptional.

The "CS mode (Charge Sustain mode)" refers to a mode in which, in principle, a priority is placed on the HEV running to maintain the power of the high voltage battery 21, and is selected as the battery SOC of the high voltage battery 21 is below the preset SOC. That is, when the battery SOC of the high voltage battery 21 is required to be sustained or maintained in a predetermined range, the HEV running is carried out by an engine power to generate the motor/generator 4. Note that the predetermined mode switching threshold, i.e. the preset SOC is set such that between a value from the CD mode to the CS mode and a value from the CS mode to the CD mode a hysteresis is provided.

The hybrid control module 81, in addition to the selection control between the "CD mode" and "CS mode", performs an engine start-up control by the starter motor 1, a charging control to charge the capacitor 23, and the discharge control from the capacitor 23.

Also, starter related controls such as below will be carried out.
(A) Time reduction control from starting the engine until the starter start-up permission.
(B) Time reduction control from the ignition on until the starter start-up permission.
(C) Deterioration progress suppression control of the capacitor 23
(D) High temperature / low temperature countermeasure control of the capacitor 23.
(E) Voltage sag or instantaneous drop prevention control of the vehicle auxiliary equipment (FIRST EMBODIMENT)..

The engine control module 82 performs a fuel injection control, an ignition control, a fuel-cut control, etc. of the transverse engine 2. The motor controller 83 performs a power driving control and regenerative control of the motor generator 4 by the inverter 26. The CVT control unit 84 performs an engagement pressure control of the first clutch 3, an engagement pressure control of the second clutch 5, a shifting hydraulic pressure control of the belt-type continuously variable transmission 6, etc. The data communication module 85, in response to remote operation of a switch of a portable remote control key and the communication being established between the portable remote control key, performs, for example, control of the locking / unlocking of a charge port lid and/or a connector locking mechanism. The lithium battery controller 86 manages a battery SOC and a battery temperature. The body control module 87 controls energization/de-energization of a starter cutoff relay 59. Finally, the under-hood switching module 87 performs energization/de-energization of a starter relay 61 incorporated therein based on a range select signal from an inhibitor switch 94.

### [DETAILED CONFIGURATION OF CAPACITOR POWERSUPPLY CONTROL]

FIG. 5 shows a capacitor power supply control processing flow executed by the hybrid control module 81 (capacitor power supply control unit). Below, a description is given of each step representing a capacitor power supply control processing configuration.

In step S1, it is determined whether or not the capacity (DC/DC capacity: power supply amount) that is chargeable to the 12V battery 22 and the capacitor 23 from the high power battery 21 via the DC/DC converter 37 is greater than the sum (required power amount) of the discharge amount of the 12V battery 22 due to the 12V system load 36 and the capacitor charging amount in preparation for the starter start-up. If Yes(DC / DC capacity> vehicle auxiliary equipment + capacitor charging amount), control proceeds to step S2, while, if No (DC / DC capacity ≦ vehicle auxiliary equipment + capacitor charging amount), control proceeds to step S3..

In step S2, subsequent to the determination of the DC / DC capacity> vehicle auxiliary equipment + capacitor charging amount in step S1, the capacitor charging current is set to either current 1(e.g. 15A), or, current 2 (e.g. 7.5A), and then, the semiconductor relay 51 (capacitor switch circuit) included in the capacitor charging circuit 41 is closed. Subsequently, the process goes to End.

In step S3, subsequent to the determination in step 1 that DC / DC capacity ≦ vehicle auxiliary equipment + capacitor charging amount. It is determined whether or not the power shortage (=power supply amount-required power amount) is less than a preset threshold value a. If Yes (power shortage <threshold a), control proceeds to step S4, while, if No (power shortage ≧ threshold a), control proceeds to step S5.
Here, "the threshold a" the voltage drop (instantaneous voltage sag) of the 12V system load 36 is not reached at the moment of starting the engine by the starter motor 1.

In step S4, subsequent to the determination that power shortage <threshold a in step S3, a command to change the capacitor charging current from current 1 (e.g. 15A) to current 2 (e.g. 7.5A) is output to the capacitor charging circuit 41, and control returns to step S1.

In step S5, subsequent to the determination that power shortage ≧ threshold a in step S3, a command to open the semiconductor relay 51 (capacitor switching circuit) of the capacitor charging circuit 41 to thereby separate the auxiliary equipment load power supply system 39 and the DLC unit 45 (starter load power supply system), and control returns to step S 1.

Now, a description is given of the operation.
The operation in the control unit of the FF plug-in hybrid vehicle of the first embodiment, description is given in **[Characteristic Operation by Capacitor Power Supply Circuit Configuration], [Charge and Discharge Operation of Capacitor Power Supply], [Power Supply Amount Fulfilment Operation from High Power Battery], [Power Supply Amount Shortage Operation (Power Shortage < Threshold a)], and [Power Supply Amount Shortage Operation (Power Shortage ≧**

### Threshold a)], separately.

### [Characteristic Operation by Capacitor Power Supply Circuit Configuration]

For example, in the idle stop vehicles, in the case where the power supply of the starter motor is set to a 12V battery, the power supply circuitry will be configured to be the capacitor power supply circuit configuration of the first embodiment with the DLC unit 45 and the fuse 40 excluded, which is now referred to as Comparative Example.

In this Comparative Example, a single 12V battery is commonly shared by the starter motor and the power source of the vehicle auxiliary equipment. Thus, when the power requirements is high for the vehicle auxiliary equipment, in response to an engine start-up by the starter motor, due to shortage of supply power, at the instant of the engine starting, an instantaneous voltage drop occurs with which the voltage of the vehicle auxiliary equipment abruptly falls.

In contrast, in the first embodiment, the auxiliary equipment load power supply system 39 is configured by connecting the high voltage battery 21 and the 12V battery 22 via the DC/DC converter 37. The DLC unit 45 is configured to include the capacitor charging circuit 41 that is connected to by branching from the DC/DC converter 37, and the capacitor connected to the capacitor charging circuit 41. Further, the capacitor power supply circuit is configured by a semiconductor relay 51 as a switch incorporated in the capacity charge circuit 41 between the auxiliary equipment load power supply system 39 and the DLC unit 45.

Through this configuration, while charging the 12V battery 22 and the capacitor 23 by the power from the high voltage battery 21, the 12V battery 22 supplies the necessary power to the 12V system load 36 of the vehicle auxiliary equipment, and the capacitor 23 supplies the necessary power to the starter motor 1. That is, the power supply is not shared between the starter motor 1 and the 12V system load 36. Further, the two power supplies, i.e. the 12V battery 22 and the capacitor 23 are subjected to charge back up by the high voltage battery 21.

Further, without modifying the power supply circuit configuration of the idle stop vehicle of Comparative Example, by adding the DLC unit 45 (capacitor charging circuit 41 + capacitor 23), the capacitor power supply circuit may be configured. Thus, since the DLC unit 45 may be added in a similar manner as addition of the auxiliary equipment, it is not necessary for the control of the high voltage battery 21 and the DC/DC converter 37 to be modified from the control of Comparative Example.

Furthermore, when the charge and discharge balance of the auxiliary equipment load power supply system 39 is likely to collapse, the DLC unit 45 (capacitor charging circuit 41+ capacitor 23) is capable of controlling the charging current, and may be separated from the auxiliary equipment load power supply system 39 by the semiconductor relay 51 representing a switch. In other words, since the DLC unit 45 (capacitor charging circuit 41 + capacitor 23) is a unit that is electrically independent from the auxiliary equipment load power supply system 39, it is not necessary for the converter capacity of the DC/DC converter 37 and the battery capacity of the 12V battery 22 to be changed from the converter capacity and the battery capacity set in Comparative Example.

### [Charge and Discharge Operation of Capacitor Power Supply]

With respect to the capacitor power supply circuit, a description is given of "Engine start control operation by the starter motor 1", "Charge control operation to the capacitor 23", and "Discharge control operation from the capacitor 23" respectively performed by the hybrid control module 81.

At the time of an engine start-up by the starter motor 1, in response to the output of the starter start-up command from the hybrid control module 81, when the HEV / IS / Relay 60 is energized, the relay switch 44 is turned on to shift the pinion 57 to a position where the pinion 57 engages with the ring gear 58. Thus, the starter start-up is performed by the starter motor 1 powered by the capacitor 23 to rotate the crankshaft of the transverse engine 2, and the HEV / IS / relay 60 is shut off after a predetermined time has elapsed of the energization. Incidentally, the starter cut-off relay 59, except when the vehicle condition for prohibiting engine start is satisfied, energization is maintained by the body control module 87. Also, the starter relay 61 built in the under-hood switching module 88 is energized only during the selection of the P range. A cut-off state is maintained at the time of selection of the D range and the like other than the P range.
Accordingly, during the engine start-up control by the starter motor 1, as a rule, while the HEV / IS / relay 60 is energized by the starter start command in the starter start-up permission conditions, the starter motor 1 is driven by using the electric power of the capacitor 23 to start up the transverse engine 2.

At the time of charging to the capacitor 23, based on the output of the charge command from the hybrid control module 81, the semiconductor relay 51 of the capacitor charging circuit 41 is closed, and a capacitor charging current is selected. Thus, by introducing the power from the high voltage battery 21 into the capacitor 23 via the DC / DC converter 37, fuse 40, semiconductor relay 51, DC / DC converter 52, a short time charging takes place in accordance with the capacitor charge current. Note that the capacitor charge current is set to current 1 (for example, 15A) as a base current. Exceptionally, the current 2 (for example, 20A) is selectable in place of the current 1.
Therefore, the charge control of the capacitor 23, while the charge command is output, using the power from the high voltage battery 21, the capacitor 23 is charged with the capacitor charging current selected.

At the time of discharge from the capacitor 23, based on the output of the natural discharge command from the hybrid control module 81, the self-discharge switch 47 of the DLC unit 45 is closed to perform self-discharge from the capacitor 23. Also, based on the output of the forced discharge command from the hybrid control module 81, by closing the forced discharge switch 48 of the DLC unit 45, the forced discharge is carried out from the capacitor 23. In the case of the forced discharge, the discharge amount per unit time is set larger than that of the natural discharge.
Thus, at the time of the natural discharge control of the capacitor 23, while the natural discharge switch 47 is closed on the basis of the natural discharge command, the electric power of the capacitor 23 is converted to the resistance heat. At the time of the forced discharge control of the capacitor 23, while the forced discharge switch 48 is closed, the electric power of the capacitor 23 is converted to the resistance heat, and discharge is performed in a shorter time than the natural discharge.

### [Power Supply Amount Fulfillment Operation from High Power Battery]

If the amount of power supply from the high power battery 21 is fulfilled or satisfied, even when the starter start-up intervention takes place during operation of the vehicle auxiliary equipment, no voltage sag or instantaneous drop of the vehicle auxiliary equipment occurs. Below, with reference to FIG. 5, a description will be given of the power supply fulfillment operation of the high power battery 21 reflecting this situation.

When the electric power supplied from the high power battery 21 is greater than the required power of the 12V battery 22 and the capacitor 23, in the flowchart of FIG. 5, control repeats the flow; step S1 → step S2 → End.

For example, at the time of running state of low discharge capacity taken out from the 12V battery 12 due to the auxiliary equipment, etc. in the daytime of fine weather with a lamp off and a wiper stopped, the DC / DC capacity (power supply amount) that is chargeable to the 12V battery 22 and the capacitor 23 via the DC/DC converter suffices. In the case, control proceeds to step S2 with the power condition of step S1 established. In step S2, the capacitor charging current is set to current 1 (e.g. 15A) and the semiconductor relay 51 integrated in the capacitor charging circuit 41 is closed.

That is, during the running state of low discharge capacity due to auxiliary equipment load, the power supply amount via the DC/DC converter 37 exceeds the required power obtained by adding the discharge capacity of the 12V battery 22 due to the 12V system load 36 to the capacitor charge amount in preparation for the starter start-up. Thus, under such conditions, even when the semiconductor relay 51 contained in the capacitor charging circuit 41 is closed, the voltage sag or instantaneous drop of the vehicle auxiliary equipment would not occur due to the starter start-up intervention.

Further, in the first embodiment, the semiconductor relay 51 is used as a switch for opening and closing a connection of the auxiliary equipment load power supply system 39 and the DLC unit 45.
That is, even when the semiconductor relay 51 using an optical semiconductor for transmitting optical signal through the insulated space between input and output is closed, and the auxiliary equipment load power supply system 39 and the DLC unit 45 are connected; a reverse flow from the capacitor 23 to the auxiliary equipment load power supply system 39 will be prevented.
Therefore, when starting the engine by the starter motor 1, the power of the capacitor 23 is used only for driving the starter motor 1. In other words, lowering the capacitance of the capacitor 23 by the reverse electrical power flow from the capacitor 23 to the auxiliary equipment load power supply system 39 is prevented, and it is possible to be prepared for a restarting command of the transverse engine 2.

### [Power Supply Shortage Operation from High Power Battery (power shortage <threshold a)]

Below, with reference to FIG. 5, description will be give of a power supply shortage operation from the high power battery 21 (power shortage <threshold a).

When the electric power supplied from the high power battery 21 is at or below the required power amount for the 12V battery 22 and the capacitor 23, and the power shortage is less than a threshold value a, in the flowchart of FIG. 5, control proceeds through step S1 → step S3 → step S4.

For example, in a running state of relatively high discharge capacity taken out from the 12V battery 22 by the auxiliary equipment load with a lamp on, a wiper in operation, etc. at night, lack for the DC/DC capacity (power supply amount) that is chargeable to the 12V battery 22 and the capacitor 23 via the DC/DC converter 37 occurs with respect to the required power amount. In this case, although the power condition of step S1 is not established in step S1 so as for control to go step S3, when the power shortage is small at less than the threshold a, it is possible to reduce the power shortage by controlling the capacitor charge level to thereby suppress occurrence of the instantaneous voltage sag of the vehicle auxiliary equipment. Thus, control proceeds from step S3 to step S4. In step S4, a command to change the capacitor charging current from current 1 (e.g. 15A) to current 2 (e.g. 7.5A) is output to the capacitor charging circuit 41.

That is, in the running state of a relatively high discharge capacity by the auxiliary equipment load, the power supply amount via the DC/DC converter 37 exceeds the required power amount represented by the sum of the discharge capacity of the 12V battery 22 and the 12V system load 36. However, under conditions of small power shortage with less than the threshold a, by changing the capacitor charging current to current 2 (<current 1), the power condition of step S1 is satisfied. That is, after changing the capacitor charging current to the current 2, in the flowchart of FIG. 5, the process proceeds to step S1 → step S2. In step S2, the capacitor charging current is set to the current 2 (e.g. 7.5A), and the semiconductor relay 51 in the capacitor charging circuit 41 is closed.

Thus, under conditions of small power shortage with less than the threshold a, by changing the capacitor charging current to current 2 (<current 1), even with the semiconductor relay 51 included in the capacitor charging circuit 41 closed, it is possible for the voltage sag of the vehicle auxiliary equipment to occur by the starter start-up intervention.

### [Power Supply Shortage Operation from High Power Battery (power shortage ≧ threshold a)]

Below, with reference to FIG. 5, or less, a description will be given of the power supply shortage operation from the high power battery 21 (power shortage ≧ threshold a).

When the electric power supplied from the high power battery 21 is at or below the required power amount due to the 12V battery 22 and the capacitor 23, and the power shortage is at or above the threshold a, in the flowchart of FIG. 5, control repeats the flow through step S1 → step S3 → step S5.

For example, in a running state of high discharge capacity taken out from the 12V battery 22 due to auxiliary equipment load by a lamp being on, a wiper in operation, an electric power steering activated, etc., lack of the DC/DC capacity (power supply amount) occurs, which is chargeable to the 12V battery 22 and the capacitor 23 via the DC/DC converter 37 with respect to the required power amount. In this case of large power shortage of at or above the threshold a, even with reduced power shortage by controlling the capacitor charge level, it is impossible to suppress the occurrence of voltage instantaneous drop of the vehicle auxiliary equipment. Thus, control proceeds from step S3 to step S5. In step S5, a command is output to the capacitor charging circuit 41 such that the semiconductor relay 51 included in the capacitor charging circuit 41 is opened, and the auxiliary equipment load power supply system 39 and the DLC unit 45 are separated.

That is, in the running state of high discharge capacity due to the auxiliary equipment load, the power supply amounts via the DC/DC converter 37 falls below the required power amount obtained by adding the discharge capacity of the 12V battery 22 due to the 12V system load 36 to the capacitor charging amount in preparation for starter start-up. In this conditions of great power shortage at or above the threshold a, the semiconductor relay 51 is opened to separate the auxiliary equipment load power supply system39 and the DLC unit 45. In other words, at the time of starter start-up, the DCL unit 45 is made electrically independent from the auxiliary equipment load power supply system 39. Therefore, at the start of the starter start-up, even the power required to drive the starter motor 1 is consumed from the capacitor 23, the power supplied to the auxiliary equipment load power supply system 39 that is electrically isolated from the DLC unit 45 is maintained as it is, and the voltage of 12V system load 36 represented by the vehicle auxiliary equipment will be prevented from being decreased sharply.

In addition, in the first embodiment, a fuse 40 is provided between the DC/DC converter 37 and the capacitor charging circuit 41, which interrupts the circuit by an excessive current flowing in a sticking failure state with the semiconductor relay 51 kept closed.
By this configuration, when the sticking or fixation failure of the relay occurs in a state where the semiconductor relay 51 is closed, due to overcurrent through the auxiliary equipment load added by the starter start-up load, the fuse 40 is burnt off to interrupt the circuit so that the auxiliary equipment load power supply system 39 and the DLC unit 45 will be separated from each other.
Therefore, even against fixation failure of the semiconductor relay 51, at the time of starter start-up operation, the voltage of the 12V system load 36, representing vehicle auxiliary equipment is prevented from decreasing suddenly.

Now, a description is given of the effect.
In the control system for the FF plug-in hybrid vehicle in the first embodiment, it is possible to obtain the following effects.

(1) A control system for a hybrid vehicle (FF plug-in hybrid vehicle) having a drive system including a starter motor 1, an engine (transverse engine 2), and a motor/generator 4, and a power supply system including a high power battery 21 (12V battery 22) as power supply for the motor/generator 4, a low power battery (12 V battery 22) as power supply for vehicle auxiliary equipment and a capacitor power supply control unit (hybrid control module 81) to control charging and discharging of the capacitor 23, the control system comprising:
   an auxiliary equipment load power supply system is configured by connecting the high power battery 21 and the low power battery (12V battery 22) via a DC/DC converter 37,
   a starter load power supply system (DCL unit 45) configured to include the capacitor 23 and a capacitor charging circuit 41 controlled by the capacitor power supply control unit (hybrid control module 81), wherein the starter load power supply system is connected to and branching from the DC/DC converter 37 of the auxiliary equipment load power supply system 39 (Fig. 2).
   Therefore, it is possible to configure the capacitor power supply circuit by only adding the capacitor 23 and the capacitor charging circuit 41 to the existing circuit without changing the control/capacity of the high power battery and the auxiliary equipment load power supply system 39.
(2) A switch (semiconductor relay 51) is provided between the auxiliary equipment load power supply system 39 and the starter load power supply system (DLC unit 45), wherein the capacitor power supply control unit (hybrid control module 81) is configured, at the time of engine start-up by the starter motor 1, to open the switch (semiconductor relay 51) to separate the auxiliary equipment load power supply system 39 and the starter load power supply system (DLC unit 45) (FIG. 5).
   Therefore, in addition to the effect of (1), when starting the engine by the starter motor 1, it is possible to prevent instantaneous voltage sag of the vehicle auxiliary equipment.
(3) The capacitor power supply control unit (hybrid control module 81) is configured, when the power supply amount that can be supplied to the low power battery (12V battery 22) and the capacitor 23 through the DC / DC converter 37 from the high power battery 21 is insufficient for the required power amount due to the auxiliary equipment load and the starter load, to open the switch (semiconductor relay 51) to separate the auxiliary equipment load power supply system 39 and the starter load power supply system (DLC unit 45) from each other (FIG. 5).
   Therefore, in addition to the effect of (2), when the shortage of power generation condition is established, it is possible to keep the switch (semiconductor relay 51) open in advance, to thereby reliably prevent instantaneous voltage sag due to the starter start-up.
(4) The capacitor power supply control unit (hybrid control module 81) is configured, when the power shortage between the power supply amount that can be supplied to the low power battery (12V battery 22) and the capacitor 23 and the required power amount due to the auxiliary equipment load and the starter load is at or above the threshold value a, to open the switch (semiconductor relay 51) to separate the auxiliary equipment load power supply system 39 and the starter load power supply system (DLC unit 45) (FIG.5).
   Therefore, in addition to the effects of (3), even though the power shortage occurrence condition exists, yet at the time of small power shortage, by performing the reduction control of the capacitor charging current to resolve the power shortage, it is possible to prevent the instantaneous low-voltage due to the starter start-up even with the switch (semiconductor relay 51) closed.
(5) The capacitor power supply control unit (hybrid control module 81) is configured, when the power shortage between the power supply amount that can be supplied to the low power battery (12V battery 22) and the capacitor 23 and the required power amount due to the auxiliary equipment load and the starter load is at or above the threshold value a, to open the switch (semiconductor relay 51) to separate the auxiliary equipment load power supply system 39 and the starter load power supply system (DLC unit 45) (FIG.5).
   Therefore, in addition to the effects of (4), at the time of large power shortage and the power shortage cannot be resolved by performing the reduction control of the capacitor charging current, by previously keeping the switch (semiconductor relay 51) open, it is possible to prevent the instantaneous low-voltage due to the starter start-up.
(6) The starter load power supply system (DLC unit 45) has a prevention circuit for reverse current from the capacitor 23 to the auxiliary equipment load power system 39 (semiconductor relay 51), when connected to the auxiliary equipment load power supply system 39 (Fig. 2).
   Therefore, in addition to the effects of (1) to (5), lowering of the capacitance of the capacitor 23 by the reverse flow of power from the capacitor 23 to the auxiliary equipment load power supply system 39 is prevented and restarting request of the reverse engine 2 by the starter motor 1 is prepared.
(7) The reverse current prevention circuit is configured by using a semiconductor relay 51 using an optical semiconductor for transmitting optical signals through a space insulated between the input and the output (FIG. 2).
   Therefore, in addition to the effect of (6), by using a semiconductor relay 51 which has a reverse flow preventing function and a switch function, it is possible to form a reverse current prevention circuit with a simple configuration without requiring additional circuitry.
(8) A fuse 40 is provided between the DC / DC converter 37 and the capacitor charging circuit 41, which interrupts the circuit due to overcurrent flowing in the sticking failure state in which the switch (semiconductor relay 51) is kept closed (FIG. 2).
   Therefore, in addition to the effects of (1) to (7), it is guaranteed against sticking failure of the switch (semiconductor relay 51) that at the time of starter start-up, the voltage transient sag would not occur where the voltage of the vehicle auxiliary equipment decreases abruptly.

Although the control system for a hybrid vehicle according to the present invention has been described based on the first embodiment, the specific configuration is not limited thereto, Without departing from the gist of the inventions pertaining to each claim in CLAIMS, design changes or addition is acceptable.

In the first embodiment, an example is shown in which the capacitor power supply control unit is configured to decrease the charging current (from current 1 to current 2) to the capacitor 23 when the power shortage is less than the threshold value a, while, when the power shortage is at or above the threshold a, the semiconductor relay 51 is opened to thereby separate the auxiliary equipment load power supply system 39 and the DLC unit 45. However, the capacitor power supply control unit may be configured to open the switch to separate the auxiliary equipment load power supply system and the starter load power supply system irrespective of the magnitude of the power shortage when the power supply amount that can be supplied to the low power battery and the capacitor from the high power battery is insufficient for the required power amount due to the auxiliary equipment load and the starter load.

In the first embodiment, an example is shown in which the capacitor power supply control unit is configured to open the switch to prevent the voltage sag of the vehicle auxiliary equipment when the power supply amount that can be supplied to the low power battery (12V battery 22) and the capacitor 23 is insufficient for the required power amount due to the auxiliary equipment load and the starter load. However, the capacitor power supply control unit may be configured, at the time of engine start-up by the starter motor, to open the switch in response to the starter start-up command to thereby separate the auxiliary equipment load power supply system and the starter load power supply system.

In the first embodiment, with respect to the capacitor power supply control unit, an example of using a hybrid control module 81 is shown. However, the capacitor power supply control unit may be provided as an independent power supply system controller. Alternatively, a power supply system control unit may be provided in a controller other than the hybrid control module.

In the first embodiment, an example is shown in which a semiconductor relay 51 is provided as a switch integrated in the capacitor charging circuit 41 provided between the auxiliary equipment load power supply system 39 and the capacitor 23. However, the switch is not limited to a semiconductor relay, and other switches may be used such as electromagnetic relays. Furthermore, it may be provided independently of the capacitor charging circuit. When refraining from using a non-contact switch as such as a semiconductor relay, a reverse current prevention circuit using a diode or the like is provided separately from the switch.

In the first embodiment, an example is shown in which the control system according to the present invention is applied to an FF plug-in hybrid vehicle. However, the control system according to the present invention may be applied to a hybrid vehicle without an external charging function. The invention is not limited to FF hybrid vehicle. The present invention can be applied also to the FR hybrid vehicle or a 4WD hybrid vehicle. In short, as a power supply or power source, the present invention is applicable to a hybrid vehicle with a high power battery as motor/generator power supply, a low power battery as vehicle auxiliary equipment power supply, and a capacitor as the starter motor power supply for engine start-up.

### CROSS-REFERENCE TO RELATED APPLICATIONS

The present application claims priority based on the Japanese Patent Application No. 2013-120687, filed in Japan Patent Office on June 7,2013, the entire disclosure of which is hereby incorporated by reference in its entirety.

## Claims

1. A control system for a hybrid vehicle having a drive system including a starter motor, an engine, and a motor/generator, and a power supply system including a high power battery as power supply for the motor/generator, a low power battery as power supply of the vehicle auxiliary equipment, a capacitor as power supply for the starter motor, and a capacitor power supply control unit that controls charging and discharging of the capacitor, the control system comprising:
an auxiliary equipment load power supply system constituted by connecting the high power battery and the low power battery via a DC/DC converter, and
a starter load power supply system constituted to include the capacitor and a capacitor charging circuit controlled by the capacitor power supply control unit, wherein the starter load power supply system is connected to and branch from the DC/DC converter of the auxiliary equipment load power supply system.

2. The control system for a hybrid vehicle as claimed in claiml, the control system further comprising a switch between the auxiliary equipment load power supply system and the starter load power supply system, wherein the capacitor power supply control unit is configured, at the time of engine start-up by the starter motor, to open the switch.

3. The control system for a hybrid vehicle as claimed in claim 2, wherein the capacitor power supply control unit is configured, when the power supply amount that can be supplied to the low power battery and the capacitor through the DC / DC converter from the high power battery is insufficient for the required power amount due to the auxiliary equipment load and the starter load, to open the switch to separate the auxiliary equipment load power supply system and the starter load power supply system from each other.

4. The control system for a plug-in hybrid vehicle as claimed in claim 3, wherein the capacitor power supply control unit is configured, when the power shortage between the power supply amount that can be supplied to the low power battery and the capacitor and the required power amount due to the auxiliary equipment load and the starter load is at or above the threshold value, to open the switch to separate the auxiliary equipment load power supply system and the starter load power supply system

5. The control system for a plug-in hybrid vehicle as claimed in claim 4, wherein the capacitor power supply control unit is configured, when the power shortage between the power supply amount that can be supplied to the low power battery and the capacitor and the required power amount due to the auxiliary equipment load and the starter load is at or above the threshold value, to open the switch to separate the auxiliary equipment load power supply system and the starter load power supply system

6. The control system for a plug-in hybrid vehicle as claimed in any one of claims 1 to 5, wherein the starter load power supply system has a prevention circuit for reverse current from the capacitor to the auxiliary equipment load power system, when connected to the auxiliary equipment load power supply system.

7. The control system for a plug-in hybrid vehicle as claimed in claim 6, wherein the reverse current prevention circuit is configured by using a semiconductor relay using an optical semiconductor for transmitting optical signals through a space insulated between the input and the output.

8. The control system for a plug-in hybrid vehicle as claimed in any one of claims 1 to 7, further comprising a fuse between the DC / DC converter and the capacitor charging circuit, which interrupts the circuit due to overcurrent flowing in the sticking failure state in which the switch is kept closed
